(19) Europäisches Patentamt
European Patent Office
Office européen des brevets

(11) **EP 4 632 109 A1**

(12) **EUROPEAN PATENT APPLICATION**

(43) Date of publication:
**15.10.2025 Bulletin 2025/42**

(21) Application number: **25167834.8**

(22) Date of filing: **01.04.2025**

(51) International Patent Classification (IPC):
**C25B 1/04** (2021.01)   **C25B 15/02** (2021.01)
**C25B 15/08** (2006.01)

(52) Cooperative Patent Classification (CPC):
**C25B 1/04; C25B 15/02; C25B 15/08;
C25B 15/085; C25B 15/087**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.04.2024 US 202463575130 P**

(71) Applicants:
• **Cummins, Inc.
Columbus, IN 47202 (US)**
• **Hydrogenics Corporation
Mississauga, ON L5T 2N6 (CA)**

(72) Inventors:
• **ANCIMER, Richard J.
Toronto, M6S 3R7 (CA)**
• **DISTELMANS, Michael Leopold Bertrand
B-2221 Booischot (BE)**
• **ROMINIYI, Olawale
Mississauga, L5M 7T8 (CA)**
• **RAJ, Richa
Columbus, 47201 (US)**
• **VALE, Michael A.
Elmira, N3B 1V2 (CA)**
• **ASARI, Magan
Mississauga, L5N 6H9 (CA)**

(74) Representative: **Marks & Clerk Cummins
1 New York Street
Manchester M1 4HD (GB)**

(54) **GAS PRESSURE CONTROLS FOR A WATER ELECTROLYZER PLANT**

(57)   The present disclosure relates to systems and methods for increasing efficiency and performance by balancing pressure in electrolytic cell. The present disclosure relates to systems and methods of utilizing different valves for controlling absolute pressure and differential in the electrolytic cell system based on hydrogen demand and the operating state of the system.

*FIG. 1B*

EP 4 632 109 A1

**Description**

**CROSS-REFERENCE TO RELATED APPLICATIONS**

This nonprovisional application claims the benefit and priority, under 35 U.S.C. § 119(e) and any other applicable laws or statutes, to U.S. Provisional Application Serial No. 63/575,130 filed on April 5, 2024, the entire disclosure of which is hereby expressly incorporated herein by reference.

**TECHNICAL FIELD**

The present disclosure relates to electrolytic cell systems, in particular, to systems and methods for balancing pressure in electrolytic cell systems for increasing efficiency and performance.

**BACKGROUND**

Electrochemical cells and electrolytic cells provide chemical reactions that include electricity. For example, a fuel cell uses hydrogen and oxygen to produce electricity. An electrolyzer uses water and electricity to produce hydrogen and oxygen.

An electrolyzer comprises one or more electrolytic cells that utilize electricity to chemically produce substantially pure hydrogen and oxygen from water. Often the electrical source for the electrolyzer is produced from power or energy generation systems, including renewable energy systems such as wind, solar, hydroelectric, and geothermal sources for the production of green hydrogen. In turn, the pure hydrogen produced by the electrolyzer is often utilized as a fuel or energy source for those same power generation systems, such as fuel cell systems.

The typical electrolytic cell, also referred to as an "electrolyzer cell," is comprised of many assemblies compressed and bound into a stack. An electrolytic cell includes a multi-component membrane electrode assembly (MEA) that has an anode, a cathode, and an electrolyte. Typically, the anode, cathode, and electrolyte of the membrane electrode assembly (MEA) are configured in a multi-layer arrangement that enables the electrochemical reaction to produce hydrogen via contact with one or more gas diffusion layers. A gas diffusion layer (GDL) and/or a porous transport layer (PTL) are typically located on one or both sides of the MEA. Bipolar plates (BPP) often reside on either side of the GDLs and separate the individual electrolytic cells of the stack from one another.

The electrolytic cells typically require that the pressure differential of the electrodes be maintained within a threshold range. This threshold range is set to limit the magnitude of the internal stresses within the electrolytic cell. There may be a loss in efficiency or operability if the resulting internal stresses are too high.

The pressure differential is controlled through a balance of plant design and controls, where the layout of piping, regulators, valves, and vent lines are used in combination with control strategies and tactics to control the pressure differential across all operating states of the electrolytic cell. Typically, balanced pressure is achieved mechanically by using interconnected back pressure regulators. However, such mechanisms can result in fluctuations that can result in a negative pressure differential and damage the electrolyzer cell stacks.

Additionally, any failure in the mechanical back pressure regulators can result in the stack pressures exceeding pressure boundaries very quickly. With a large demand for green hydrogen production, electrolyzer systems comprising electrolytic cells are being scaled up. An efficient scaling method comprises the use of a single balance of plant system wrapped around an electrolytic cell stack module with multiple electrolytic stacks. In such configurations, a single event of loss in pressure control could cause a lot of damage.

The present disclosure provides systems and methods for a robust pressure control mechanism in electrolytic cell systems. The present disclosure is specifically directed toward systems and methods for controlling the operation of hydrogen and oxygen valves in electrolytic cell systems.

SUMMARY

Embodiments of the present disclosure are included to meet these and other needs.

In one aspect of the present disclosure, described herein, is an electrolytic cell system comprising a hydrogen gas pressure control configuration including at least a first hydrogen pressure control valve, a second hydrogen pressure control valve, and a first alternate depressurization path, and a gas pressure control system configured to control two pressures within the electrolytic cell system based on an operating state of the electrolytic cell system.

In some embodiments of the first aspect, the system may further an oxygen gas pressure control configuration including a first oxygen pressure control valve, a second oxygen pressure control valve, and a second alternate depressurization path.

In some embodiments of the first aspect, the two pressures are absolute hydrogen pressure and a differential pressure measure at two positions in the electrolytic cell system.

In some embodiments of the first aspect, the first alternate depressurization path may be a dome-loaded regulator. In some embodiments of the first aspect, the second alternate depressurization path may be an orifice.

In some embodiments of the first aspect, the absolute pressure is determined by a sensor positioned in a hydrogen gas module comprised in the system and wherein the two positions comprise a deionized water inlet and hydrogen outlet or hydrogen inlet at a cell stack module comprised in the electrolytic cell system.

In some embodiments of the first aspect, the gas pressure control system is configured to control opening of the first hydrogen pressure control valve, the second hydrogen pressure control valve, the first oxygen pressure control valve, and the second oxygen hydrogen pressure control valve based on a model that uses upstream parameters or downstream parameters of a hydrogen gas module and/or an oxygen gas module. In some embodiments of the first aspect, the model uses one or more of gas volume, gas temperature, gas composition, and liquid levels in hydrogen gas module and/or oxygen gas module separators.

In some embodiments of the first aspect, the hydrogen gas pressure control configuration further includes a third hydrogen pressure control valve positioned parallel to the first hydrogen pressure control valve, wherein the third hydrogen pressure control valve is not larger than the first hydrogen pressure control valve, and wherein the first hydrogen pressure control valve and the third hydrogen pressure control valve are configured to flow about 100% of the hydrogen to a hydrogen vent.

In some embodiments of the first aspect, the first hydrogen pressure control valve is sized to accommodate about 20% to about 100% of the hydrogen flow to the hydrogen vent and the third hydrogen pressure control valve is sized to accommodate about 5% to about 25% of the hydrogen flow to the hydrogen vent.

In some embodiments of the first aspect, the first hydrogen pressure control valve is sized to accommodate about 2% to about 50% of the hydrogen flow to the hydrogen vent, and the third hydrogen pressure control valve is sized to accommodate about 2% to about 50% of the hydrogen flow to the hydrogen vent.

In some embodiments of the first aspect, the system is configured to implement a control valve split logic when operating the first, second, and third hydrogen pressure control valves based on an operating state of the electrolytic cell system.

In some embodiments of the first aspect, when the absolute pressure in the hydrogen flow increases above a hydrogen threshold amount, the gas pressure control system is configured to reduce hydrogen and oxygen production rate.

In some embodiments of the first aspect, the hydrogen threshold amount threshold amount may exceed a pressure set point of the system by about 0.5 bar to about 1.5 bar. In some embodiments of the first aspect, when the absolute pressure in the hydrogen flow increases above a second hydrogen threshold amount, the gas pressure control system is configured to send hydrogen to a hydrogen vent. In some embodiments of the first aspect, the second threshold amount threshold is higher than the first threshold amount.

In some embodiments of the first aspect, when the absolute pressure in the hydrogen flow increases above a first hydrogen threshold amount, the gas pressure control system is configured to send hydrogen to a hydrogen vent.

In some embodiments of the first aspect, the hydrogen threshold amount threshold amount may exceed a pressure set point of the system by about 0.5 bar to about 3 bar.

In some embodiments of the first aspect, when the differential pressure in the oxygen flow increases above an oxygen threshold amount, the gas pressure control system is configured to send oxygen to an oxygen vent. In some embodiments of the first aspect, the oxygen threshold amount threshold amount may exceed a pressure set point of the system by about 0.5 bar to about 1.5 bar.

In some embodiments of the first aspect, the hydrogen gas pressure control configuration further includes a third hydrogen pressure control valve positioned parallel to the second hydrogen pressure control valve, wherein the third hydrogen pressure control valve is not larger than the second hydrogen pressure control valve, and wherein the second hydrogen pressure control valve and the third hydrogen pressure control valve are configured to flow about 100% of the hydrogen to a user.

In some embodiments of the first aspect, the second hydrogen pressure control valve is sized to accommodate about 20% to about 100% of the hydrogen flow to the user and the third hydrogen pressure control valve is sized to accommodate about 5% to about 25% of the hydrogen flow to the user. In some embodiments of the first aspect, the second hydrogen pressure control valve is sized to accommodate about 2% to about 50% of the hydrogen flow to the user and the third hydrogen pressure control valve is sized to accommodate about 2% to about 50% of the hydrogen flow to the user.

In some embodiments of the first aspect, the system is configured to implement a control valve split logic when operating the first, second, and third hydrogen pressure control valves based on an operating state of the electrolytic cell system.

In some embodiments of the first aspect, the valves of the oxygen gas pressure control configuration and the valves of the hydrogen gas pressure control configuration are configured to allow matching pressure drop under normal operating conditions.

In some embodiments of the first aspect, the valves of the oxygen gas pressure control configuration are configured to have a maximum opening that is about 2 to 3 times a maximum opening of valves of the hydrogen gas pressure control configuration

In some embodiments of the first aspect, the valves of the hydrogen gas pressure control configuration are used for controlling differential pressure in the electrolytic cell system under startup operating state.

In some embodiments of the first aspect, the first hydrogen valve, the second hydrogen valve, the first oxygen valve, or the second oxygen valve is configured in a parallel configuration with a third valve and wherein the system is configured to implement a control valve split logic when operating the valve in the parallel configuration with the third valve based on an operating state of the electrolytic cell system.

In a second aspect of the present disclosure, described herein, is a method of operating an electrolytic cell system comprising determining hydrogen demand from the electrolytic cell system, determining an operating state of the electrolytic cell system, passing hydrogen through hydrogen gas pressure control configuration including a first hydrogen pressure control valve, a second hydrogen pressure control valve, and a first alternate depressurization path, and controlling two pressures within the electrolytic cell system based on the operating state of the electrolytic cell system.

In some embodiments of the second aspect, the method further comprises passing oxygen through an oxygen gas pressure control configuration including a first oxygen pressure control valve, a second oxygen pressure control valve, and a second alternate depressurization path.

In some embodiments of the second aspect, the first alternate depressurization path may be a dome-loaded regulator.

In some embodiments of the second aspect, the second alternate depressurization path may be an orifice.

In some embodiments of the second aspect, the two pressures are absolute hydrogen pressure and a differential pressure measure at two positions in the electrolytic cell system.

In some embodiments of the second aspect, the method comprises using a gas pressure control system for controlling opening of the first hydrogen pressure control valve, the second hydrogen pressure control valve, the first oxygen pressure control valve, and the second oxygen hydrogen pressure control valve based on a model that uses upstream parameters of downstream parameters of a hydrogen gas module and/or an oxygen gas module.

In some embodiments of the second aspect, the model uses one or more of the parameters comprising gas volume, gas temperature, gas composition, and liquid levels in hydrogen gas module and/or oxygen gas module separators.

In some embodiments of the second aspect, the hydrogen gas pressure control configuration further includes a third hydrogen pressure control valve positioned parallel to the first hydrogen pressure control valve, wherein the third hydrogen pressure control valve is not larger than the first hydrogen pressure control valve, and wherein the first hydrogen pressure control valve and the third hydrogen pressure control valve are configured to flow about 100% of hydrogen to a hydrogen vent. In some embodiments of the second aspect, the first hydrogen pressure control valve is sized to accommodate about 20% to about 100% of the hydrogen flow to the hydrogen vent and the third hydrogen pressure control valve is sized to accommodate about 5% to about 25% of the hydrogen flow to the hydrogen vent.

In some embodiments of the second aspect, the method comprises implementing a control valve split logic to determine relative flow through the first, second, and third hydrogen pressure control valves based on the operating state of the electrolytic cell system.

In some embodiments of the second aspect, the hydrogen gas pressure control configuration further includes a third hydrogen pressure control valve positioned parallel to the second hydrogen pressure control valve, wherein the third hydrogen pressure control valve is not larger than the second hydrogen pressure control valve, and wherein the second hydrogen pressure control valve and the third hydrogen pressure control valve are configured to flow about 100% of hydrogen to a user. In some embodiments of the second aspect, the first hydrogen pressure control valve is sized to accommodate about 20% to about 100% of the hydrogen flow to the hydrogen vent and the third hydrogen pressure control valve is sized to accommodate about 5% to about 25% of the hydrogen flow to the hydrogen vent.

In some embodiments of the second aspect, the second hydrogen pressure control valve is sized to accommodate about 20% to about 100% of the hydrogen flow to the user and the third hydrogen pressure control valve is sized to accommodate about 5% to about 25% of the hydrogen flow to the user.

In some embodiments of the second aspect, the second hydrogen pressure control valve is sized to accommodate about 2% to about 50% of the hydrogen flow to the user and the third hydrogen pressure control valve is sized to accommodate about 2% to about 50% of the hydrogen flow to the user.

**BRIEF DESCRIPTION OF THE DRAWINGS**

These and other features, aspects, and advantages of the present invention will become better understood when the following detailed description is read with reference to the accompanying drawings, in which like characters represent like parts throughout the drawings, wherein:

FIG. 1A is perspective view of an electrolyzer cell stack according to the present disclosure;

FIG. 1B is a schematic view of an electrolysis system configured to utilize the electrolyzer cells stack of FIG. 1A;

FIG. 1C is a schematic view of an additional portion of the electrolysis system of FIG. 1B;

FIG. 2 is a schematic showing the components in a gas pressure control system of the electrolysis system;

FIG. 3 is a schematic showing an embodiment of a hydrogen gas pressure control configuration in the gas pressure control system;

FIG. 4 is a schematic showing an embodiment of an oxygen gas pressure control configuration in the gas pressure control system;

FIG. 5 is a schematic illustrating the components of the gas pressure control system;

FIG. 6 is a graph illustrating different zones depending on the control valve split logic when operating hydrogen pressure control valves;

FIG. 7A is a graph illustrating instabilities before the implementation of the control valve split logic when operating hydrogen pressure control valves;

FIG. 7B is a graph illustrating the removal of the instabilities after the implementation of the control valve split logic when operating hydrogen pressure control valves;

FIG. 8 is a graph illustrating the transition between zone 1 and zone 2 when operating hydrogen pressure control valves; and

FIG. 9 is a graph illustrating the transition between zone 1, zone 2, and zone 3 when operating hydrogen pressure control valves.

## DETAILED DESCRIPTION

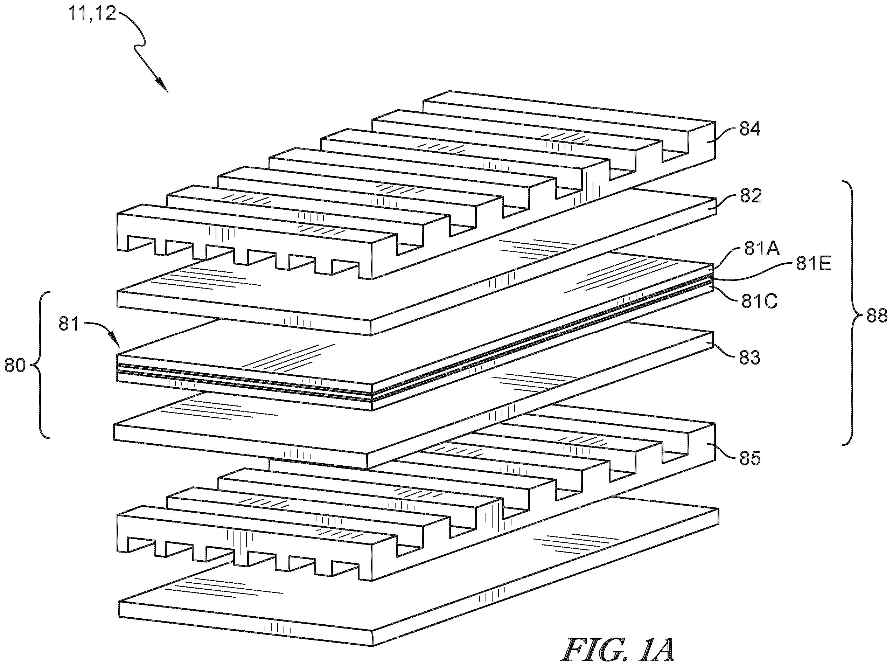

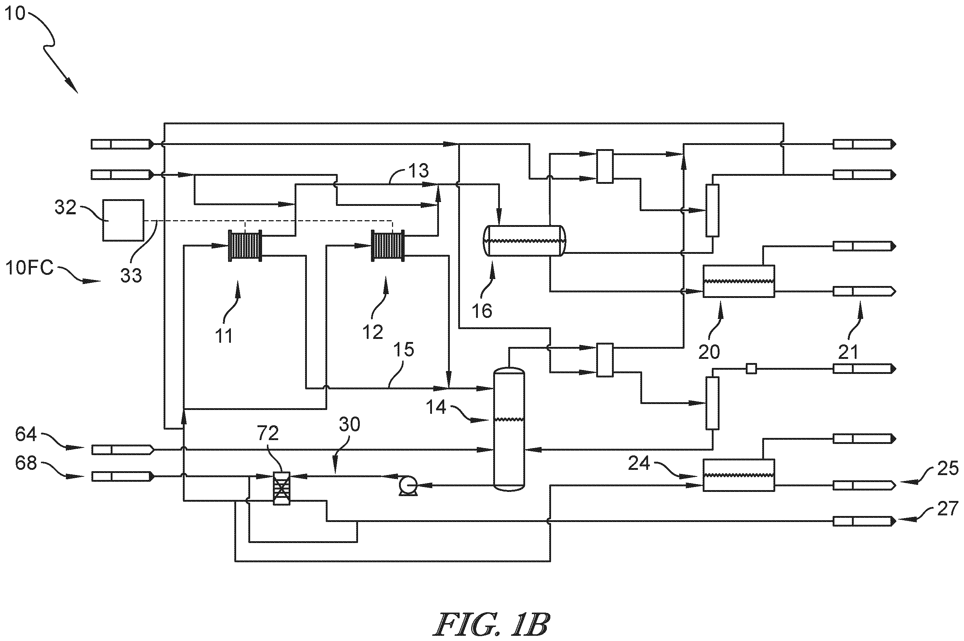

As shown in FIGS. 1A and 1B, electrolysis systems 10 are typically configured to utilize water and electricity to produce hydrogen and oxygen. An electrolysis systems 10 typically includes one or more electrolyzer cells 80 that utilize electricity to chemically produce substantially pure hydrogen 13 and oxygen 15 from deionized water 30. Often the electrical source for the electrolysis systems 10 is produced from power or energy generation systems, including renewable energy systems such as wind, solar, hydroelectric, and geothermal sources for the production of green hydrogen. In turn, the pure hydrogen produced by the electrolysis systems 10 is often utilized as a fuel or energy source for those same power generation systems, such as fuel cell systems. Alternatively, the pure hydrogen produced by the electrolysis systems 10 may be stored for later use.

The typical electrolyzer cell 80, or electrolytic cell, is comprised of multiple assemblies compressed and bound into a single assembly, and multiple electrolyzer cells 80 may be stacked relative to each other, along with bipolar plates (BPP) 84, 85 therebetween, to form an electrolyzer cell stack (for example, electrolyzer cell stacks 11, 12 in FIG. 1B). Each electrolyzer cell stack 11, 12 may house a plurality of electrolyzer cells 80 connected together in series and/or in parallel. The number of electrolyzer cell stack 11, 12 in the electrolysis systems 10 can vary depending on the amount of power required to meet the power need of any load (e.g., fuel cell stack). The number of electrolyzer cells 80 in an electrolyzer cell stack 11, 12 can vary depending on the amount of power required to operate the electrolysis systems 10 including the electrolyzer cell stack 11, 12.

An electrolyzer cell 80 includes a multi-component membrane electrode assembly (MEA) 81 that has an electrolyte 81E, an anode 81A, and a cathode 81C. Typically, the anode 81A, cathode 81C, and electrolyte 81E of the membrane electrode assembly (MEA) 81 are configured in a multi-layer arrangement that enables the electrochemical reaction to produce hydrogen and/or oxygen via contact of the water with one or more gas diffusion layers 82, 83. The gas diffusion layers (GDL) 82, 83, which may also be referred to as porous transport layers (PTL), are typically located on one or both sides of the MEA 81. Bipolar plates (BPP) 84, 85 often reside on either side of the GDLs and separate the individual electrolyzer cells 80 of the electrolyzer cell stack 11, 12 from one another. One bipolar plate 85 and the adjacent gas diffusion layers 82, 83 and MEA 81 can form a repeating unit 88.

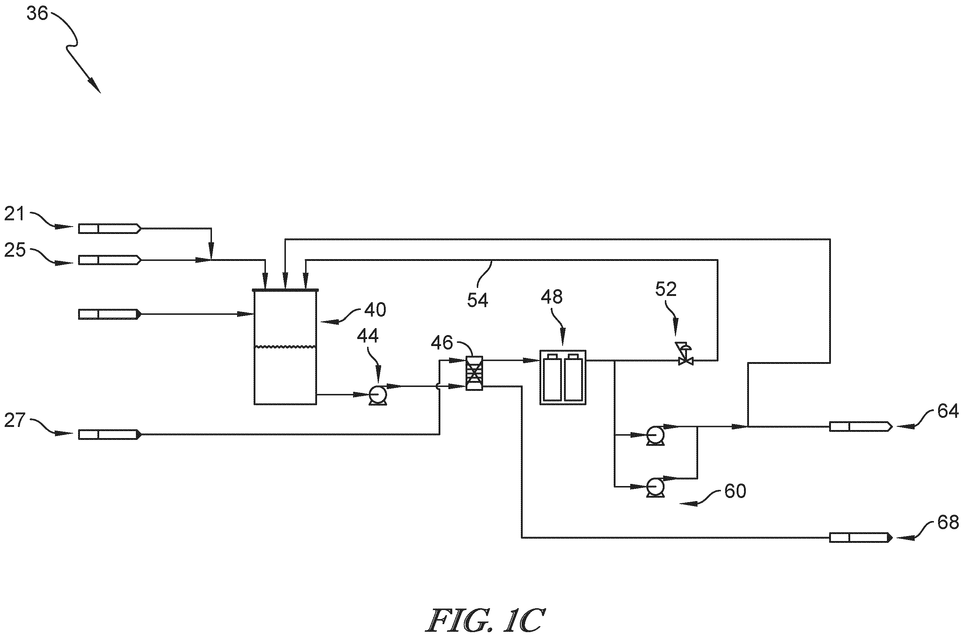

As shown in FIGS. 1B and 1C, an exemplary electrolysis system 10 can include two electrolyzer cell stacks 11, 12 and a fluidic circuit 10FC including the various fluidic pathways shown in FIGS. 1B and 1C that is configured to circulate, inject, and purge fluid and other components to and from the electrolysis systems 10. A person skilled in the art would understand that one or a variety of a number of components within the fluidic circuit 10FC, as well as more or less than two electrolyzer cell stacks 11, 12, may be utilized in the electrolysis systems 10. For example, the electrolysis systems 10 may include one electrolyzer cell stack 11, and in other examples, the electrolysis systems 10 may include three or more electrolyzer cell stacks.

The electrolysis systems 10 may include one or more types of electrolyzer cell stacks 11, 12 therein. In the illustrated embodiment, a polymer electrolyte membrane (PEM) electrolyzer cell 80 may be utilized in the stacks 11, 12. A PEM electrolyzer cell 80 typically operates at about 4°C to about 150°C, including any specific or range of temperatures comprised therein. A PEM electrolyzer cell 80 also typically functions at about 100 bar or less but can go up to about 1000 bar (including any specific or range of pressures comprised therein), which reduces the total energy demand of the system. A standard electrochemical reaction that occurs in a PEM electrolyzer cell 80 to produce hydrogen is as follows.

- Anode: $2H_2O \rightarrow O_2 + 4H^+ + 4e^-$
- Cathode: $4H^+ + 4e^- \rightarrow 2H_2$
- Overall: $2H_2O$ (liquid) $\rightarrow 2H_2 + O_2$

Additionally, a solid oxide electrolyzer cell 80 may be utilized in the electrolysis systems 10. A solid oxide electrolyzer cell 80 will function at about 500°C to about 1000°C, including any specific or range of temperatures comprised therein. A standard electrochemical reaction that occurs in a solid oxide electrolyzer cell 80 to produce hydrogen is as follows.

- Anode: $2O^{2-} \rightarrow O_2 + 4e^-$
- Cathode: $2H_2O \rightarrow 4e^- + 2H_2 + 2O^{2-}$
- Overall: $2H_2O \rightarrow 2H_2 + O_2$

Moreover, an AEM electrolyzer cell 80 may utilized, which uses an alkaline media. An exemplary AEM electrolyzer cell 80 is an alkaline electrolyzer cell 80. Alkaline electrolyzer cells 80 comprise aqueous solutions, such as potassium hydroxide (KOH) and/or sodium hydroxide (NaOH), as the electrolyte. Alkaline electrolyzer cells 80 typically perform at operating temperatures ranging from about 0°C to about 150°C, including any specific or range of temperatures comprised therein. Alkaline electrolyzer cell 80 generally operate at pressures ranging from about 1 bar to about 100 bar, including any specific or range of pressures comprised therein. A typical hydrogen-generating electrochemical reaction that occurs in an alkaline electrolyzer cell 80 is as follows.

- Anode: $4OH^- \rightarrow O_2 + 2H_2O + 4e^-$
- Cathode: $4H_2O + 4e^- \rightarrow 2H_2 + 4OH^-$
- Overall: $2 H_2O\ 2H_2 + O_2$

As shown in FIG. 1B, the electrolyzer cell stacks 11, 12 include one or more electrolyzer cells 80 that utilize electricity to chemically produce substantially pure hydrogen and oxygen from water. In turn, the pure hydrogen produced by the electrolyzer may be utilized as a fuel or energy source. As shown in FIG. 1B, the electrolyzer cell stack 11, 12 outputs the produced hydrogen along a fluidic connecting line 13 to a hydrogen separator 16, and also outputs the produced oxygen along a fluidic connecting line 15 to an oxygen separator 14.

The hydrogen separator 16 may be configured to output pure hydrogen gas and also send additional output fluid to a hydrogen drain tank 20, which then outputs fluid to a deionized water drain 21. The oxygen separator 14 may output fluid to an oxygen drain tank 24, which in turn outputs fluid to a deionized water drain 25. A person skilled in the art would understand that certain inputs and outputs of fluid may be pure water or other fluids such as coolant or byproducts of the chemical reactions of the electrolyzer cell stacks 11, 12. For example, oxygen and hydrogen may flow away from the cell stacks 11, 12 to the respective separators 14, 16. The system 10 may further include a rectifier 32 configured to convert electricity 33 flowing to the cell stacks 11, 12 from alternating current (AC) to direct current (DC).

The deionized water drains 21, 25 each output to a deionized water tank 40, which is part of a polishing loop 36 of the fluidic circuit 10FC, as shown in FIG. 1C. Water with ion content can damage electrolyzer cell stacks 11, 12 when the ionized water interacts with internal components of the electrolyzer cell stacks 11, 12. The polishing loop 36, shown in greater detail in FIG. 1C, is configured to deionize the water such that it may be utilized in the cell stacks 11, 12 and not damage the cell stacks 11, 12.

In the illustrated embodiment, the deionized water tank 40 outputs fluid, in particular water, to a deionized water polishing pump 144. The deionized water polishing pump 144 in turn outputs the water to a water polishing heat exchanger 46 for polishing and treatment. The water then flows to a deionized water resin tank 48.

Coolant is directed through the electrolysis systems 10, in particular through a deionized water heat exchanger 72 that is fluidically connected to the oxygen separator 14. The coolant used to cool said water may also be subsequently fed to the water polishing heat exchanger 46 via a coolant input 27 for polishing. The coolant is then output back to the deionized water heat exchanger 72 for cooling the water therein.

After the water is output from the deionized water polishing heat exchanger 46 and subsequently to the deionized water resin tank 48, a portion of the water may be fed to deionized water high pressure feed pumps 60. Another portion of the water may be fed to a deionized water pressure control valve 52, as shown in FIG. 1C. The portion of the water that is fed to the deionized water pressure control valve 52 flows through a recirculation fluidic connection 54 that allows the water to flow back to the deionized water tank 40 for continued polishing.

In some embodiments, the electrolysis systems 10 may increase deionized water skid for polishing water flow to flush out ions within the water at a faster rate. The portion of the water that is fed to the deionized water high pressure feed pumps 60 is then output to a deionized water feed 64, which then flows into the oxygen separator 14 for recirculation and eventual reuse in the electrolyzer cell stacks 11, 12. This process may then continuously repeat.

The electrolysis systems 10 described herein, may be used in stationary and/or immovable power system, such as industrial applications and power generation plants. The electrolysis systems 10 may also be implemented in conjunction with other electrolysis systems 10.

The present electrolysis systems 10 may be comprised in stationary or mobile applications. The electrolysis systems 10 may be in a vehicle or a powertrain 100. A vehicle or powertrain 100 comprising the electrolysis systems 10 may be an automobile, a pass car, a bus, a truck, a train, a locomotive, an aircraft, a light duty vehicle, a medium duty vehicle, or a heavy-duty vehicle.

In addition, it may be appreciated by a person of ordinary skill in the art that the electrolysis system 10, electrolyzer stack 11, 12, and/or the electrolyzer cell 80 described in the present disclosure may be substituted for any electrochemical system, such as a fuel cell system, a fuel cell stack, and/or a fuel cell (FC), respectively. As such, in some embodiments, the features and aspects described and taught in the present disclosure regarding electrolysis system 10, electrolyzer stack 11, 12, and/or the electrolyzer cell 80 also relate a fuel cell system, a fuel cell stack, and/or a fuel cell (FC), respectively. In further embodiments, the features and aspects described or taught in the present disclosure do not relate, are not the same, and are therefore distinguishable from, those of a fuel cell system, a fuel cell stack, and/or a fuel cell (FC).

Water electrolysis systems 10 require tight control over pressure and a pressure differential across the anode and cathode. Lack of pressure control may damage the electrolysis systems 10. This disclosure is directed to systems and methods for maintaining control over the pressure differential across anticipated operating ranges of the electrolysis system 10.

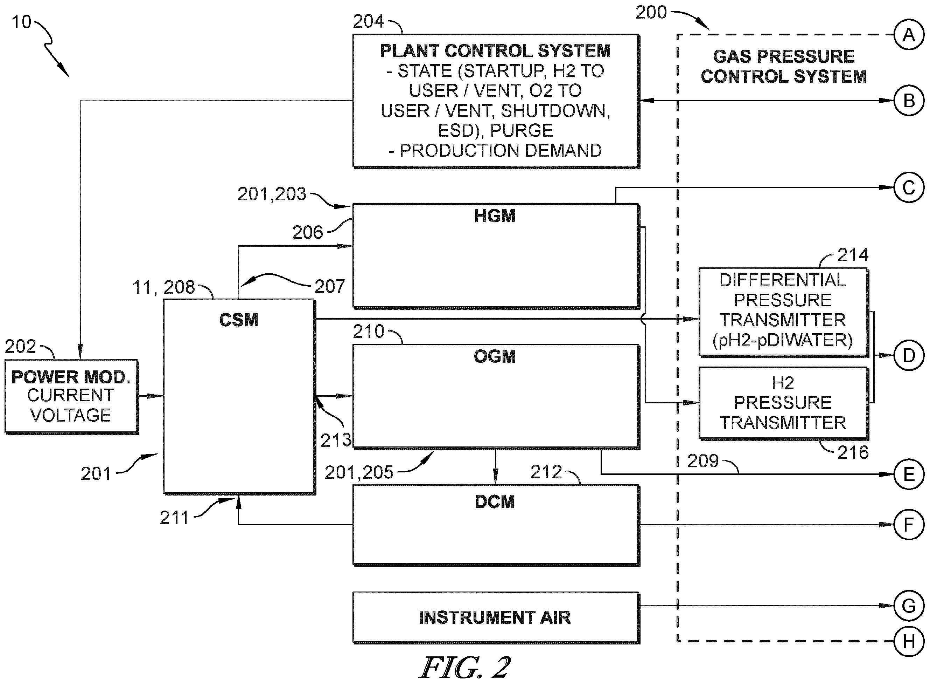

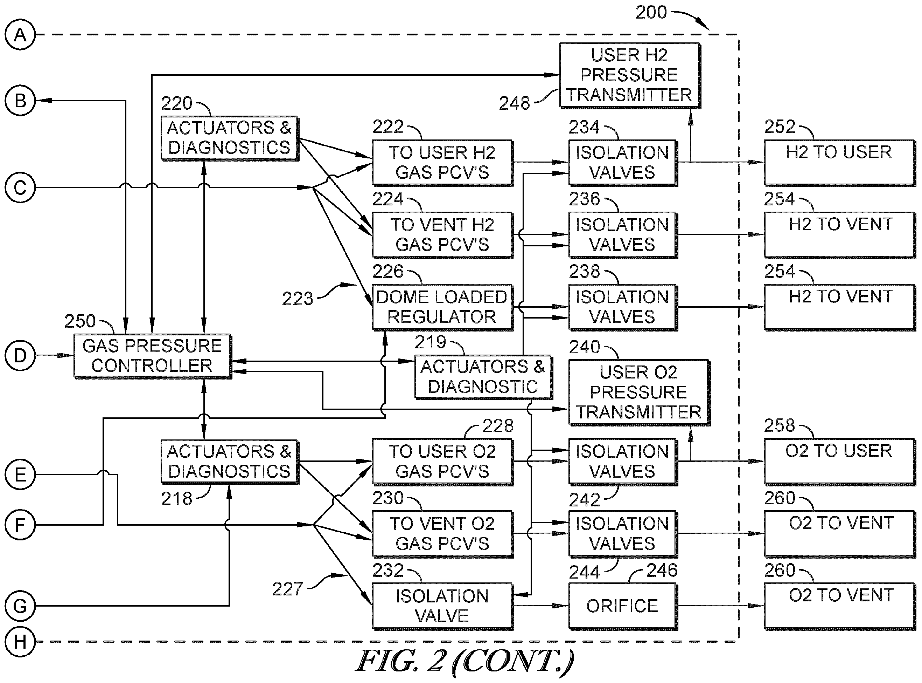

FIG. 2 illustrates the components in a gas pressure control system 200 of the electrolysis system 10. The electrolysis system 10 may include a PEM electrolyzer cell in a cell stack module (CSM) 208 that produces oxygen and hydrogen. Oxygen and hydrogen are produced from deionized (DI) water at the CSM 208. Hydrogen produced in the CSM 208 may be directed from a hydrogen gas module (HGM) 206 through a hydrogen gas pressure control valve 224 and one or more isolation valves 236 to a hydrogen vent 254. Additionally or alternatively, hydrogen may be directed through a hydrogen gas pressure control valve 222 and one or more isolation valves 234 to a user 252. Additionally or alternatively, hydrogen may be directed through an alternative hydrogen depressurization path 223. For example, hydrogen may be directed through a dome loaded regulator 226 and one or more isolation valves 238 to the hydrogen vent 254 (e.g., an emergency hydrogen vent). As shown in FIG. 2, deionized (DI) water is directed back to the CSM 208 from a DI water circulation module (DCM) 212. The inlet pressure of DI water at the CSM 208 and the DI water flow rate to the DCM 212 may affect the operation of the dome loaded regulator 226.

Oxygen produced in the CSM 208 may be directed from an oxygen gas module (OGM) 210 through an oxygen gas pressure control valve 230 and one or more isolation valves 244 to an oxygen vent 260. Additionally or alternatively, oxygen may be directed through an oxygen gas pressure control valve 228 and one or more isolation valves 242 to an oxygen user 258. Additionally or alternatively, oxygen may be directed through an alternative oxygen depressurization path 227. For example, oxygen may be directed through an isolation valve 232 and an orifice 246 during an emergency to the oxygen vent 260. Oxygen may flow through the orifice 246 for both emergency stop and efficiency trips.

One or more sensors 201 may be configured to measure the hydrogen pressure in the HGM 206. One or more sensors 201 may be configured to measure hydrogen pressure within the stack (e.g., CSM 208), stack manifold, just outside stack, and/or downstream of the stack (e.g., at separator 16). The sensors 201 may be configured to account for the multiphase presence of gas and liquid water.

One or more sensors 201 may be configured to measure differential pressure between a hydrogen stack outlet 208 and a DI water inlet 211 at the CSM 208, and the differential pressure between the hydrogen user 252 and the oxygen user. The sensors 201 may monitor a pressure drop across a water side of CSM 208. The sensors 201 may measure the pressure difference between a deionized (DI) water inlet 211 and a DI water outlet 213. The sensors 201 may measure differential pressure by measuring an oxygen side pressure and then determining a differential by accounting for a hydrogen side pressure.

Alternatively, the sensor 201 may be a differential pressure sensor that directly measures differential pressure between any two locations. The sensors 201 may be positioned upstream or downstream of the CSM 208 (e.g., at the DI water inlet 211 or DI water outlet 213). The sensors 201 may transmit information through a differential pressure transmitter 214 and a pressure transmitter 216 to a gas pressure controller 250.

In some embodiments factors such as hydrogen mass flow, hydrogen gas volume, liquid height in a hydrogen/liquid separator 203 located in the HGM 206, and/or hydrogen temperature may affect pressure measurements made by the sensors 201 and/or transmitted by the pressure transmitter 216. In some embodiments, factors such as hydrogen mass flow, hydrogen gas volume, liquid height in the hydrogen/liquid separator 203, and/or hydrogen temperature may affect the rate of pressure change that may need to be made to ensure minimal damage to the system 10.

In some embodiments, factors such as hydrogen mass flow, hydrogen gas volume, liquid height in the hydrogen/liquid separator 203, and/or hydrogen temperature, oxygen mass flow, oxygen gas volume, liquid height in an oxygen/liquid separator 205 located in the OGM 210, and/or oxygen temperature may affect pressure measurements made by the sensors 201 and/or transmitted by the differential pressure transmitter 214. In some embodiments, factors such as hydrogen mass flow, hydrogen gas volume, liquid height in the hydrogen/liquid separator 203, and/or hydrogen temperature, oxygen mass flow, oxygen gas volume, liquid height in the oxygen/liquid separator 205, and/or oxygen temperature may affect the rate of pressure change that may need to be made to ensure minimal damage to the system 10.

Typically, the electrolysis system 10 may operate in safe pressure regions. In some embodiments, there may be a maximum pressure differential between the cathode and the anode of the electrolyzer cells in the CSM 208. In some embodiments, it may be required to maintain the pressure differential between the cathode (p_cathode) and anode (p_anode), where the difference between the p_cathode and the p_anode is greater than about 0 bar. In some embodiments, negative pressure differentials may lead to damage of the CSM 208, leading further to increased gas crossover and related performance consequences. In some embodiments, the electrolysis system 10 may have more tolerance to a positive pressure differential. In some embodiments, a pressure differential in the range of about 2 bar to about 10 bar may lead to such damage. For example, a pressure differential of about 2 bar to about 10 bar, of about 5 bar to about 10 bar, or greater than 10 bar may lead to such damage.

Generally, there may be a pressure drop from anode inlet to anode outlet in an electrolyzer cell stacks in the CSM 208 due to water flow through the anode. This pressure drop may depend on water flow rate, oxygen production rate, and/or operating pressure. This pressure drop (while operating) may range from about 0.5 bar to about 4 bar, including any pressure or range comprised therein. For example, this pressure drop can range from about 1 bar to about 4 bar, about 1 bar to about 3 bar, or about 0.5 bar to about 1.5 bar.

The pressure across the cathode side of the electrolyzer cell (e.g., CSM 208) may depend on the design of the electrolyzer cell stacks in the CSM 208. In some embodiments, outlets for hydrogen produced may be provided on two sides of the CSM 208. In such a two-exit (symmetric) configuration, the pressure across the cathode side tends to be the highest toward the center of the CSM 208 and the lowest toward the hydrogen outlets of the CSM 208. The magnitude of pressure may change depending on the design of flow paths, the hydrogen production rate, and/or the rate of water cross over.

In some embodiments, the gas pressure controller 250 may account for these internal pressure differentials. For example, if the pressure drop from the anode inlet to the anode outlet is about 2 bar, and the pressure across the cathode side is about 0.2 bar from the center of the CSM 208 to hydrogen outlet, then to maintain p_cathode - p_anode > 0 throughout the CSM 208, the gas pressure controller 250 may consider these two constraints as equivalents. In some embodiments, the gas pressure controller 250 may consider the pressure differentials at the inlet and outlet sides as representative of the lowest and highest differentials through the CSM 208.

$$p\_cathode\_out - p\_anode\_in > 0 \text{ bar} \quad \text{--------------------(1)}$$

$$p\_cathode\_out - p\_anode\_out > 2 \text{ bar} \quad \text{--------------------(2)}$$

In some embodiments, the gas pressure controller 250 may provide a buffer to allow for transients and/or dynamic operation. For example, if the p_cathode_out - p_anode_in requires a damage pressure differential (i.e., a pressure differential that can damage the CSM 208) of greater than about 0 bar, the gas pressure controller 250 may target a pressure differential of about 0 bar to 2 bar, including any pressure differential or range comprised therein. For example, the gas pressure controller 250 may target a pressure differential of about 0 bar to about 0.5 bar, about 0.5 to 1 bar, or about 0.5 bar to about 1.5 bar.

In some embodiments, the gas pressure controller 250 may consider possible damage to the CSM 208 from positive pressure differential limits (i.e., tolerance when the pressure at the cathode is higher than at the anode). For example, if the low-side pressure differential limit is about 0 bar, the high-side pressure differential limit may be set to be less than about 5 bar. If p_cathode_out - p_anode_in is used to maintain a pressure differential above about 0 bar, and if the anode side pressure drop is about 3 bar, and the tolerance to positive pressure differential is about 5 bar, then the target pressure difference, i.e., p_cathode_out - p_anode_in may be set to be less than about 2 bar (i.e., 5 bar - 3 bar). Therefore, when the target pressure is higher than about 2 bar, the pressure differential within CSM 208 would be greater than about 5 bar, i.e., higher than the high-side pressure differential limit.

In some embodiments, the gas pressure controller 250 may consider buffers. In the above example, if the buffer is about 2 bar (i.e., 5 bar - 0 bar - 3 bar), the buffer may be divided between the need to avoid negative and positive pressure differentials. For example, the buffer may be evenly divided, p_cathode_out - p_anode_in may have a buffered target of about 1 bar. Such a buffered target would result in 4 bar positive differential between p_cathode_out - p_anode_out. Therefore, there would be a 1 bar buffer on both sides.

A plant control system 204 may communicate with the gas pressure controller 250, transmitting state information to the hydrogen user 252, the hydrogen vent 254, the oxygen user 258, and/or the oxygen vent 260. The gas pressure controller 250 may process and/or interpret the information from sensors 201, may process and/or interpret operating state information (e.g., shutdown, startup, normal operation, etc.). The plant control system 204 and/or the gas pressure controller 250 may transmit hydrogen and oxygen demands to the hydrogen and oxygen pressure control and actuation valves and diagnostics 218, 219, 220. The actuation valves and diagnostics 218, 219, 220 may respond to the hydrogen and/or oxygen demand and transmit signals to hydrogen pressure controls valves and isolation valves 222, 224, 234, 236, 238 and to oxygen pressure controls valves and isolation valves 228, 230, 232, 242, 244.

In some embodiments, diagnostic routines may transmit actual versus expected valve position to the gas pressure controller 250. The gas pressure controller 250 may interpret diagnostic information and errors in the ability to achieve target pressure and differential pressure. The gas pressure controller 250 may transmit information to plant control system 204 and request a change in operating state and/or gas production demand based on diagnostics.

The electrolysis system 10 can operate in one of many states. For example, a first operating state may comprise hydrogen being sent to the user 252 and oxygen being sent to the oxygen user 258. A second operating state may comprise hydrogen being sent to the hydrogen vent 254 and oxygen being sent to the vent 260. A third operating state may comprise a switch transient state between the first and the second operating states.

The switch transient state may also include conditions under which hydrogen switches from being sent to the hydrogen vent 254, to being sent to the hydrogen user 252 while oxygen continues to be sent to the oxygen vent 260. In some embodiments, hydrogen is being sent to the hydrogen user 252 and oxygen is being sent to the oxygen vent 260.

A fourth operating state may comprise a startup state including pressurization of the electrolysis system 10. A fifth operating state may comprise shutdown of the electrolysis system 10 including depressurization of the electrolysis system 10. A sixth operating state may include an emergency shutdown of the electrolysis system 10. A seventh operating state may comprise purging the electrolysis system 10.

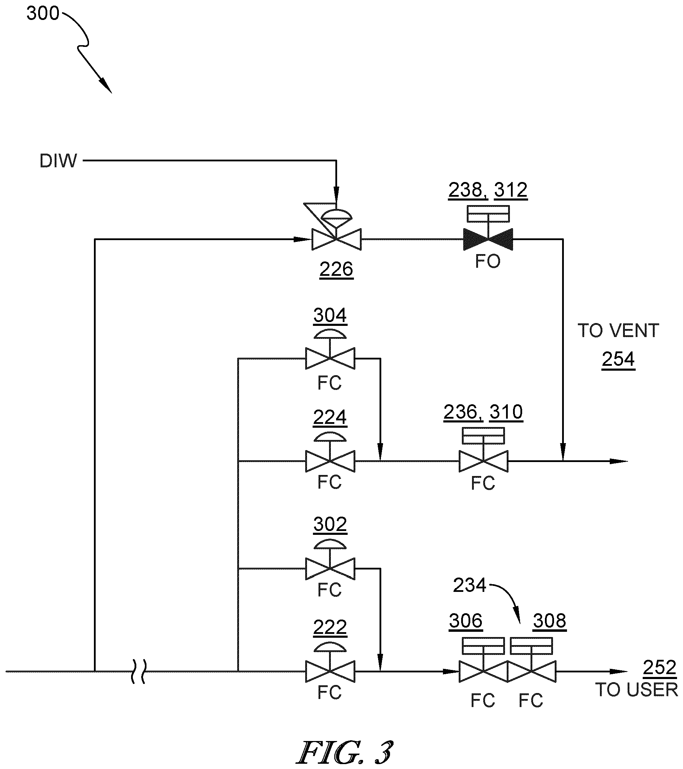

FIG. 3 illustrates an embodiment of a hydrogen gas pressure control configuration 300 in the gas pressure control system 200. Typically, the hydrogen gas pressure control configuration 300 is used by the gas pressure controller 250 to set the absolute pressure in the hydrogen separator 203 located in the HGM 206. The hydrogen gas pressure control configuration 300 includes the hydrogen gas pressure control valves 224, 222 and the dome loaded regulator 226.

Further, in some embodiments, as shown in FIG. 3, the hydrogen gas pressure control configuration 300 may include one or more trim or parallel valves 304, 302 positioned parallel to the hydrogen gas pressure control valves 224, 222 respectively. The one or more trim or parallel valves 304, 302 may be smaller than the hydrogen gas pressure control valves 224, 222. For example, less hydrogen may be able to flow through the valves 304, 302 compared to the valves 224, 222. In some embodiments, the trim or parallel valve 304 and the hydrogen gas pressure control valve 224 are configured to flow about 100% of the hydrogen to the hydrogen vent 254. In some embodiments, the trim or parallel valve 302 and the hydrogen gas pressure control valve 222 are configured to flow about 100% of the hydrogen to the user 252.

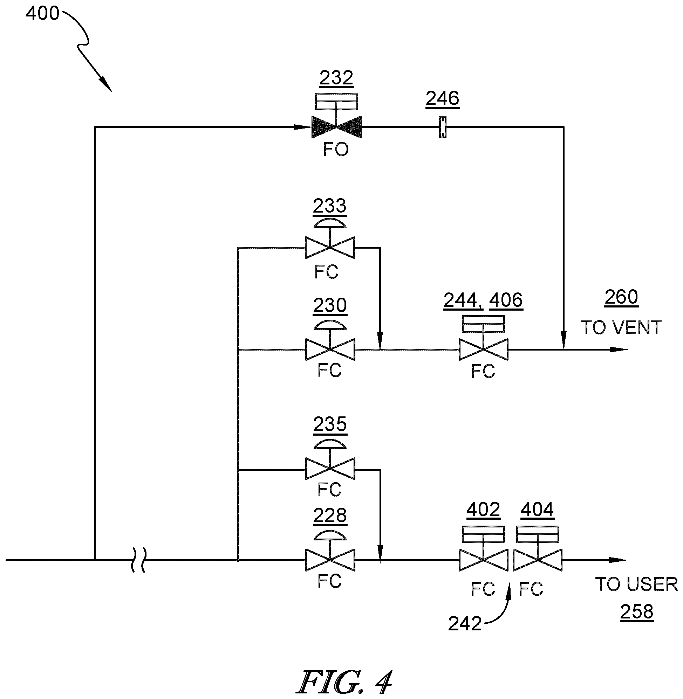

FIG. 4 illustrates an embodiment of an oxygen gas pressure control configuration 400 in the gas pressure control system 200. Typically, the oxygen gas pressure control configuration 400 is used by the gas pressure controller 250 to set the pressure difference between the hydrogen outlet 207 and the deionized (DI) water inlet 211 around the electrolyzer cell stack 11 in the CSM 208 as shown in FIG. 2. The pressure measurements may be taken by sensors 201 positioned at locations that give representative measurements to the gas pressure controller 250.

The oxygen gas pressure control configuration 400 shown in FIG. 4 includes the oxygen gas pressure control valves 228, 230. In some embodiments, the oxygen gas pressure control configuration 400 may include one or more trim or parallel valves 233, 235 positioned parallel to the oxygen gas pressure control valves 228, 230. The one or more trim or parallel valves 233, 235 may be smaller than the oxygen gas pressure control valves 228, 230. For example, less oxygen may be able to flow through the trim valves compared to the valves 228, 230. In some embodiments, the trim or parallel valve and the oxygen gas pressure control valve 230 are configured to flow about 100% of the oxygen to the oxygen vent 260. In some embodiments, the trim or parallel valve and the oxygen gas pressure control valve 228 are configured to flow about 100% of the oxygen to the oxygen user 258.

Referring to FIG. 3, the isolation valve 234 in the hydrogen gas pressure control configuration 300 may include a double shutoff valve 306, 308 to prevent hydrogen release to the hydrogen user 252. The isolation valve 236 configured to prevent hydrogen release to the hydrogen vent 254 may be a shutoff valve 310. Similarly, the isolation valve 242 in the oxygen gas pressure control configuration 400, shown in FIG. 4, may include a double shutoff valve 402, 404 to prevent oxygen release to the oxygen user 258. The isolation valve 244 configured to prevent oxygen release to the vent 260 may be a shutoff valve 406.

The double shutoff valves 306, 308 and 402, 404 are used to ensure proper functioning of potential pressure source that may be incorporated by the user. The isolation valve 238 in the hydrogen gas pressure control configuration shown in FIG. 3 may be a depressurization valve 312 and may be used under emergency conditions to vent hydrogen to the hydrogen vent 254. Similarly, the orifice 246 in the oxygen gas pressure control configuration shown in FIG. 4 may be used to vent oxygen into the atmosphere via the oxygen vent 260.

The normal depressurization by the gas pressure control system 200 may be typically done by actuating the oxygen gas pressure control valves 230, 228 and/or the hydrogen gas pressure control valves 224, 222 and progressively lowering a pressure set point down to safe pressure region that may near atmospheric pressure. Under normal operating condition hydrogen pressure is controlled to a pressure set point by the gas pressure controller 250. For example, the pressure set point may be in range of about 20 bar to about 35 bar, including any value of range comprised therein. During normal shutdown, the pressure set point can be decreased by rate of decrease of about 2 bar/min to about 3 bar/min, including any rate or range of rate comprised therein to near atmospheric pressure. The rate of decrease may be chosen such that both the absolute hydrogen pressure and the pressure differential can be controlled by the valves 230, 228, 224, 222 and such that the rate of decrease will not cause any damage to components within the system 10. The depressurization may be completed over an acceptable timeframe ranging from about 5 to about 15 minutes, including any timeframe or range of timeframe comprised therein.

The hydrogen gas pressure control valves 224, 222 are configured to operate during a normal operating state of the electrolysis system 10. In some embodiments, the trim or parallel valves 302, 304, shown in FIG. 3, are configured to operate when the electrolysis system 10 malfunctions and or otherwise requires a valve larger than the hydrogen gas pressure control valves 224, 222 to correct the pressure by generating a step response towards the safe pressure region.

In one embodiment, the method of depressurization comprises opening the isolation valve 232 to release the oxygen stored at pressure. The orifice 246 may limit the flow rate of the oxygen to an acceptable amount. The method may further comprise opening the depressurization valve 312 to release the hydrogen stored at pressure.

The upstream dome loaded regulator 226 may mitigate any pressure balance fluctuations between hydrogen and oxygen over the electrolyzer cell stacks 11. The dome loaded regulator 226 is connected to the deionized water inlet 211 of the electrolyzer cell stacks 11. There may be no bias, so the dome loaded regulator 226 may strive for zero delta pressure between hydrogen and deionized water. The capacity of the dome loaded regulator 226 is an effective flow area of the dome loaded regulator. The dome loaded regulator 226 may be a blow off dome regulator 226 that can utilize the dome shaped chamber to maintain a constant outlet pressure by venting excess pressure through a relief valve by controlling flow rates. The capacity of the dome loaded regulator 226 may be large enough to blow off hydrogen while maintaining an acceptable pressure balance. The capacity of the dome loaded regulator 226 may depend on the gas volumes of the separators 203, 205.

The orifice 246 may be designed so that oxygen velocity remains in an acceptable range of about 1 m/s to about 10 m/s, including any velocity or range comprised therein. The size of the orifice 246 may allow a normal depressurization time of about 5 minutes to about 15 minutes, including any time or range comprised therein. The dome loaded regulator 226 may maintain a hydrogen pressure at the cathode or hydrogen outlet 207 of the CSM 208 that is about the same as the deionized water inlet 211 pressure. Hence, the differential pressure may be about 0 bar. In some embodiments, this differential pressure may be about 0 bar to about 1 bar, including any pressure or range comprised therein.

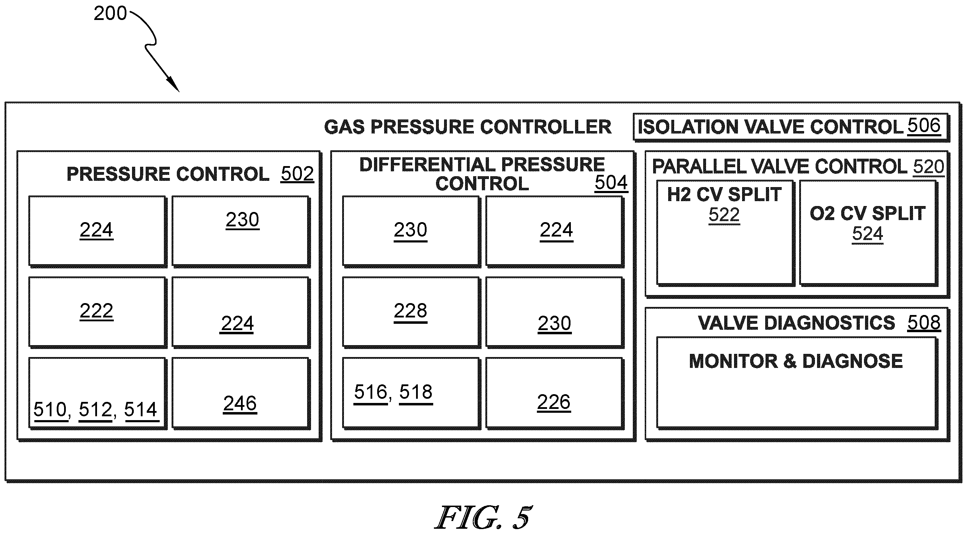

In one embodiment, as shown in FIG. 5, the gas pressure control system 200 may comprise a pressure control system 502, a differential pressure control system 504, an isolation valve control system 506, and/or a valve diagnostics module 508. The pressure control system 502 may control the operation of and/or respond to the pressure control valves 222, 224, 230 and/or the orifice 246. The pressure control valve 222 may be used to transmit hydrogen to the hydrogen user 252. The pressure control valve 224 may be used to vent hydrogen to the hydrogen vent 254 and/or during shut down. The pressure control valve 230 may be used during start-up. The orifice 246 may be used during emergency shut down. The pressure control system 502 may also determine a decrease in the demand in the hydrogen production rate.

When the pressure rises above a threshold pressure and the operating state directs hydrogen to the hydrogen vent 254, a component of the pressure control system 502, a vent hydrogen controller 510, may respond to the demand decrease of the production rate. When the pressure rises above the threshold pressure and the operating state directs hydrogen to the hydrogen user 252, a component of the pressure control system 502, a user hydrogen controller 512, may respond to the demand decrease of the production rate. The threshold pressure may exceed the pressure set point by about 1 bar to about 10 bar, including any pressure or range comprised therein. For example, the threshold pressure may range from about 0.5 bar to about 5 bar, about 1 bar to 1.5 bar, about 1 bar to about 3 bar, about 3 bar to about 10 bar, and/or about 5 bar to about 10 bar. The threshold pressure may be based on a pressure rating of the electrolysis system 10. For example, if the system 10 has a pressure rating of about 40 bar absolute pressure and a pressure set point of an absolute pressure of about 35 bar, the threshold pressure may be set to be below 5 bar. Under such conditions, the system may enter emergency shutdown at an absolute pressure above 35 bar.

In some embodiments, the vent hydrogen controller 510 and the user hydrogen controller 512 may have upper limits imposed on the amount of reduction in hydrogen production that can be allowed. In some embodiments, an audio or visual alarm may be triggered when the threshold pressure is crossed.

In some embodiments, if the pressure continues to rise despite a reduction in the production, a vent valve controller 514 may be triggered to open the vent valve 224 to provide an additional pathway to reduce pressure. For example, the vent valve controller 514 may be triggered if the threshold pressure ranges from about 0.1 to about 5 bar above the threshold pressure used for the user hydrogen controller 512. For example, the vent valve controller 514 may be triggered when the threshold pressure is about 0.25 bar to about 2 bar or about 0.5 bar to about 1.5 bar above the threshold pressure used for the user hydrogen controller 512.

In some embodiments, an overprotection method to reset one or more pressure reduction mechanisms, such as the user hydrogen controller 512 and the vent valve controller 514 may be implemented so that a system shutdown can be avoided. For example, the difference in operating pressure and the pressure downstream of the control valve 234 (i.e., user pressure) may be monitored. Once this user pressure rises above a user pressure threshold (i.e., the pressure upstream of valve 234 is greater than downstream pressure plus threshold pressure), the overpressure protection method may be implemented.

The overpressure protection method may include reducing flow through the vent valve controller 514 (i.e., reduced amount of vented hydrogen). The overpressure protection method may include reducing flow through the user hydrogen controller 512 (i.e., return to user demanded hydrogen production rate). The overpressure protection method may include opening the orifice 246 by using the isolation valve 232. The overpressure protection method may include opening the dome loaded regulator 226 using the isolation valve 238.

The differential pressure control system 504 may control the operation of and/or respond to the pressure control valves 224, 228 230, and/or the dome loaded regulator 226. The pressure control valve 224 may be used during start up. The pressure control valve 230 may vent oxygen to the oxygen vent 260 during shutdown. The pressure control valve 228 may be used to transmit oxygen to the oxygen user 258. The dome loaded regulator 226 may be used during emergency shut down. When the pressure rises above the threshold pressure and the operating state directs oxygen to the oxygen vent 260, there may be a decrease in the demand of production. A component of the differential pressure control system 504, a vent oxygen controller 518, may respond to this decrease in demand.

The isolation valve control system 506 controls the isolation valves 234, 236, 238 that control and allow hydrogen to be sent to the hydrogen user 252 and/or to the hydrogen vent 254. Similarly, the isolation valve control system 506 comprises controls of the isolation valves 242, 244 that allow oxygen to be sent to the user 258 and/or to the oxygen vent 260. When the operating state directs oxygen to user 258 and/or when the differential pressure rises above the threshold pressure, a component of differential pressure control system 504, a user oxygen controller 516, may respond to direct a portion of the oxygen to the oxygen vent 260.

The threshold pressure can range from about 5 bar to about 0 bar below a maximum allowable high side differential pressure, including any pressure or range comprised therein. For example, the threshold pressure can range from about 5 bar to about 3 bar, about 3 bar to about 0 bar, or about 2 bar to about 0.5 bar below a maximum allowable high side differential pressure as determined by the characteristics of the CSM 208. Alternatively, the threshold pressure may be set to when the differential pressure rises about 0.5 to about 5 bar, including any pressure or range comprised therein, above the differential pressure set point to which the differential pressure control system 504 is targeting. The orifice 246 may be opened by using the isolation valve 232 and the the dome loaded regulator 226 may be opened using the isolation valve 238.

The valve diagnostics module 508 comprises systems and methods to monitor and diagnose the positions of one or more pressure control valves 222, 224, 228, 230, 304, 302, one or more isolation valves 234, 236, 238, 242, 244, 306, 308, 310, 402, 404, 406, the orifice 246, and/or the dome loaded regulator 226. The valve diagnostics module 508 evaluates the operation of one or more pressure control valves 222, 224, 228, 230, one or more isolation valves 234, 236, 238, 242, 244, the orifice 246, and/or the dome loaded regulator 226 in comparison to a commanded value (cmd).

In one embodiment, the pressure control system 502 and the differential pressure control system 504 may be configured to operate simultaneously. In one embodiment, the pressure control system 502 and the differential pressure control system 504 may be configured to operate sequentially. In some embodiments, the operation of one or more of the pressure control valves 222, 224, 228, 230, one or more isolation valves 234, 236, 238, 242, 244, the orifice 246, and/or the opening of the dome loaded regulator 226 may be determined by the gas pressure controller 250.

In some embodiments, the operation of one or more of the pressure control valves 222, 224, 228, 230, one or more isolation valves 234, 236, 238, 242, 244, the orifice 246, and/or the dome loaded regulator 226 may depend on the operating state of the electrolysis system 10. In some embodiments, the operation of one or more of the pressure control valves 222, 224, 228, 230, one or more isolation valves 234, 236, 238, 242, 244, the orifice 246, and/or the dome loaded regulator 226 may depend on demand on the electrolysis system 10 and/or actual production by the electrolysis system 10.

During production of hydrogen sent to user 252 or to the hydrogen vent 254, the valve 224 may be used to control pressure on hydrogen side and the valve 230 may be used to control differential pressure. Under start-up state, the valve 224 may be used to control differential pressure and the valve 230 may be used to control oxygen pressure. Under normal depressurization, the valve 224 may be used to control hydrogen pressure and the valve 230 may be used for differential pressure, but the target pressure may vary. Under an emergency (abnormal) shut down, isolation valves 234, 236, 238, 242, 244 may be configured to allow the orifice 246 and/or the dome loaded regulator 226 to control the oxygen and hydrogen pressures.

In some embodiments, the operation of one or more of the pressure control valves 222, 224, 228, 230, one or more isolation valves 234, 236, 238, 242, 244, the orifice 246, and/or the dome loaded regulator 226 may depend on a mathematical model or a lookup table based on hydrogen and oxygen pressure and volume. For example, the pressure change in a gaseous system can be determined based on a balance between inlet mass or volumetric flow, outlet mass or volumetric flow, gas properties, temperatures, pressures, volume, and/or flow restrictions.

The hydrogen and/or oxygen volume may be variable or fixed. For example, in electrolyzer systems, the total volume is sensitive to the water levels in the separators. The dynamics of gas pressure may change significantly with changes in volume.

A mathematical model may be used, for example, to describe the system 10 in such a way that the required outlet mass or volumetric flow to achieve a given change in pressure is estimated. The required valve position of any of the valves 222, 224, 228, 230 to achieve this mass or volumetric flow may be estimated based on conditions upstream and downstream of the respective valve 222, 224, 228, 230. The mathematical model may also account for the expected rate of response of the valves, i.e., may account for valve dynamics. A mathematical model of either one of, or both of, the oxygen and hydrogen gas modules 210, 206 may be used.

In some embodiments, the operation of one or more of the pressure control valves 222, 224, 228, 230, one or more isolation valves 234, 236, 238, 242, 244, the orifice 246, and/or the dome loaded regulator 226 may be determined based on the demand on the electrolysis system 10 in conjunction with a reverse look-up table. The reverse look-up table may be used to determine valve position enabling flexibility of operation. For example, the gas pressure controller 250 may be used to demand a flow rate or a Cv (effective flow area) of a certain valve. Valves may have an effective flow area that does not vary in direct proportion to the valve position. A look-up table may be used to convert the demanded Cv into a corresponding valve position that provides the desired Cv. Without this, the gas pressure controller 250 may need to compensate for these discrepancies.

In some embodiments, the gas pressure control system 200 may comprise a parallel valve control 520 that controls the operation of one or more parallel valves 304, 302. The one or more trim or parallel valves (e.g., 304, 302) may be used to meet the turn-down ratio of the electrolysis system 10 when the controllable range of a single valve 224, 222, 228, 230 is insufficient. In some embodiments, a hydrogen control valve split logic 522 and/or an oxygen control valve split logic 524 may be used to split demand between the valves 224, 222, 228, 230 and one or more trim or parallel valves (e.g., 302, 304) in a controllable way, enabling robust operation of the electrolysis system 10. In some embodiments, the one or more trim or parallel valves (e.g., 304, 302) may enable a smooth transition from vent 260/254 to user 258/252 and vice versa. In some embodiments, a control split logic may be used between the vent 260/254 and user 258/252. For example, a controlled switch may be used to make a smooth transition from the vent 260/254 to user 258/252 and vice versa.

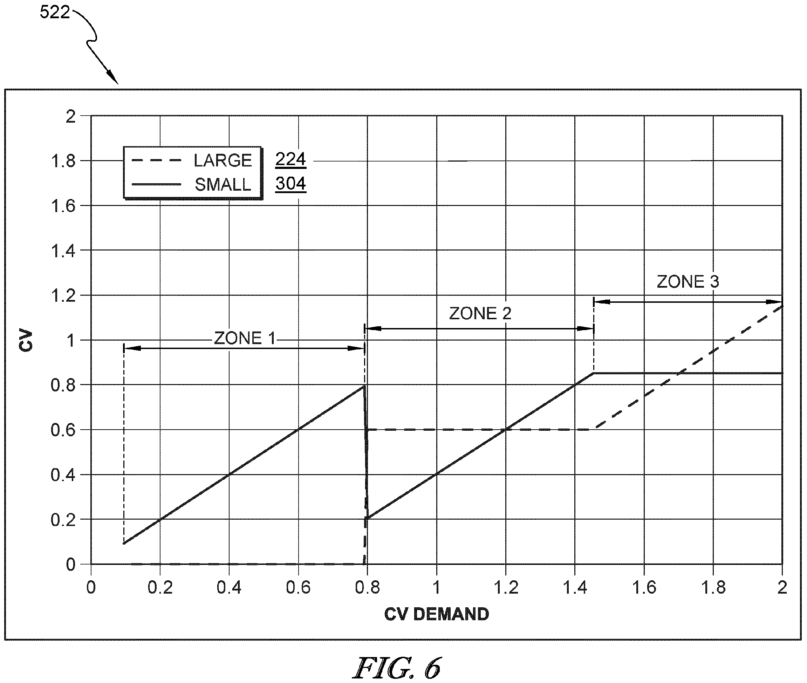

FIG. 6 illustrates different zones depending on the hydrogen control valve split logic 522 where the valve 224 is the larger valve and the valve 304 is the smaller valve. Zone 1 indicates valve 224, 304 operation when the larger valve 224 is closed and the smaller valve 304 is opened. Zone 2 indicates valve 224, 304 operation when the larger valve 224 is opened at a fixed position (e.g., 20% or 23%) and the smaller valve 304 is in control and responsive to hydrogen demand. Zone 3 indicates valve 224, 304 operation when the larger valve 224 is in control and responsive to hydrogen demand and the smaller valve 304 is opened at a fixed position (e.g., 80%).

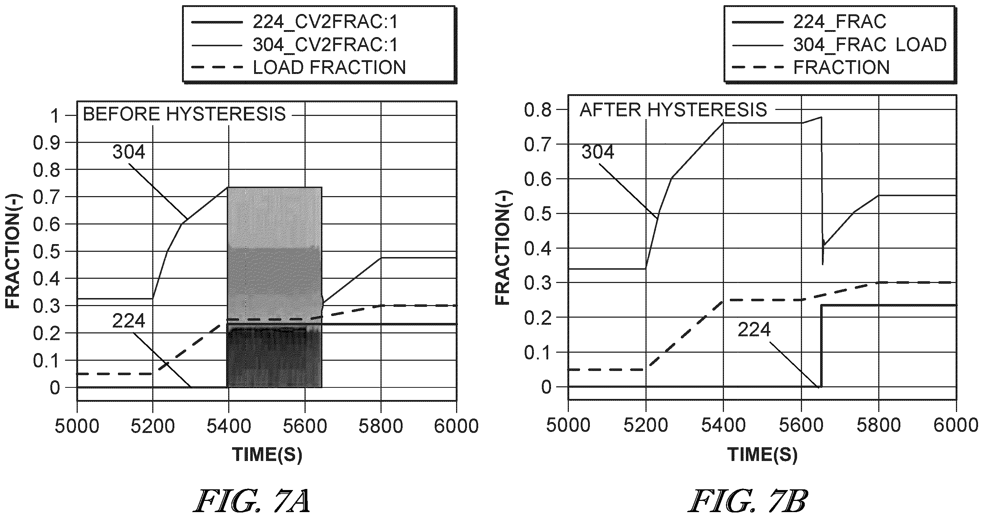

As shown in FIGS. 7A-7B, the hydrogen control valve split logic 522 eliminates instabilities. FIG. 7A illustrates the instabilities before the implementation of the control valve split logic and FIG. 7B illustrates the removal of the instabilities when the control valve split logic is implemented. A valve flow coefficient (Cv) of any given valve is directly proportional to flow through that valve. Maximum Cv of valve corresponds to a valve position fraction of 1 indicating a fully open valve. The relationship between Cv and valve position fraction can be linear or nonlinear.

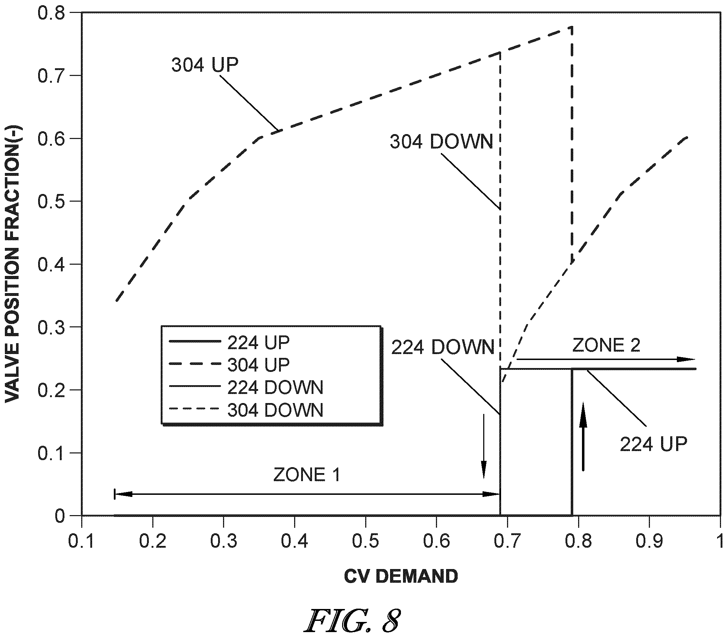

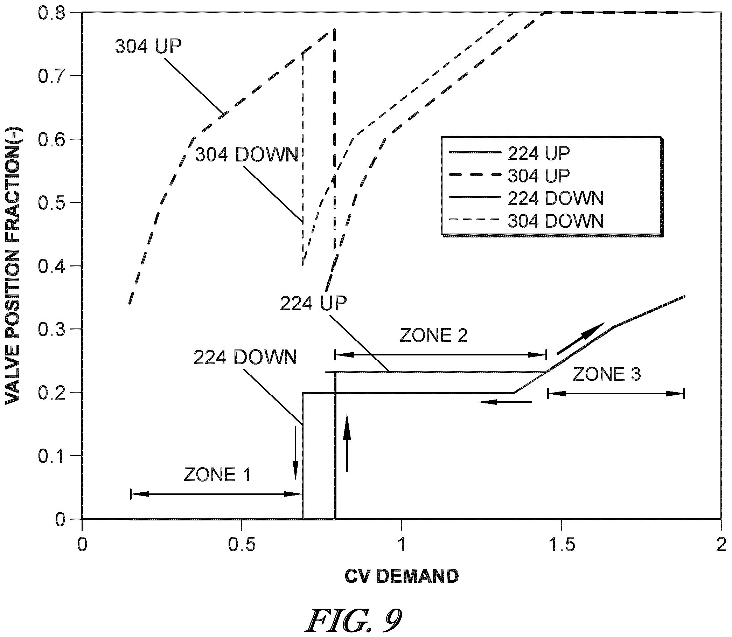

FIGS. 8 and 9 illustrate the transition between the zones described in FIG. 6. As shown in FIG. 8, Cv of the valve 304 during the path up may be 0.69 and during the path down may be 0.59 because the valve 224 is fixed at a 20% opening in zone 2. The Cv of the valve 224 operating at about 20% opening may be about 0.5 and the Cv of the valve 304 operating at about 20% opening may be about 0.09. As shown in FIG. 9, an additional Cv of about 0.1 may be added so that during the transition from zone 3 to zone 1, valve 304 may be operated at about 80% opening and valve 224 may be operated at about 20% opening.

Hysteresis logic is added to minimize instabilities and/or oscillations in valves position fraction while transitioning between zones. Hysteresis logic includes different transition Cv on path up as compared to path down between zones. For example, transition Cv for a path up may be equal to Cv for path down + 0.1 as shown in Fig 8.

As shown in FIG. 9, Cv transition from Zone 1 to Zone 2 may be done at one Cv level higher than needed to make sure hysteresis is added during Zone 3 to Zone 2 transition. An additional Cv of about 0.1 may be added so that during the transition from zone 3 to zone 1, valve 304 may be operated at about 80% opening and valve 224 may be operated at about 20% opening.

In some embodiments, the valves 224, 222, 228, 230 may be larger than the trim or parallel valves (e.g., 302, 304). The larger valves 224, 222, 228, 230 may be configured to be about 20% to about 100% of the turn-down ratio, including any percentage or range of percentages comprised therein. For example, the larger valves 224, 222, 228, 230 may be configured to be about 20% to about 30%, about 30% to about 40%, about 40% to about 50%, about 50% to about 60%, about 60% to about 70%, about 70% to about 80%, about 80% to about 90%, or about 90% to about 100% of the turn-down ratio.

The smaller valves 302, 304 may be configured to be about 5% to about 25% of the turn-down ratio, including any percentage or range of percentages comprised therein. For example, the smaller valves 302, 304 may be configured to be configured for about 5% to about 10%, about 10% to about 15%, about 15% to about 20%, or about 20% to about 25% of the turn-down ratio. In other embodiments, the valves 224, 222, 228, 230 may be smaller than the trim or parallel valves (e.g., 302, 304) and configured accordingly.

In some embodiments, the valves 224, 222, 228, 230 and the trim or parallel valves (e.g., 302, 304) may be both configured to be medium-sized valves. The valves 224, 222, 228, 230, 302, 304 may be configured to be about 2% to about 50% of the turn-down ratio, including any percentage or range of percentages comprised therein. For example, the valves 224, 222, 228, 230, 302, 304 may be configured to be about 2% to about 10%, about 10% to about 20%, about 20% to about 30%, about 30% to about 40%, about 40% to about 50% of the turn-down ratio. In some embodiments, 100% of the flow due to the turn-down ratio of the electrolysis system 10 may be through one or more of the valves 224, 222, 228, 302, 304.

Using medium sized valves 224, 222, 228, 230, 302, 304 may enable robust shutdown of the electrolysis system 10 if one of the valves 224, 222, 228, 230, 302, 304 fails. For example, if one of the valves of 224/304 or 302/222 fails to close, the other valve 224/304 or 302/222 in the parallel configuration provides the ability to control a wider range to meet the turn-down ratio. Similarly, if one of the valves of 224/304 or 302/222 fails to open, then the rate of depressurization in the electrolysis system 10 is slower than having one larger valve and one smaller valve.

In one embodiment, the maximum allowable flow rate in the hydrogen side valves 224, 222, 302, 304 and the oxygen side valves 228, 230 may be chosen to ensure that the gas pressure controller 250 can control differential pressure between the hydrogen pressure at the cathode outlet and the pressure at the deionized water inlet 211 of the CSM 208 under all conditions including but not limited to instances when one or more valves 224, 222, 228, 230, 302, 304 fails to open or close. For example, if one of the hydrogen side valves 224, 222, 302, 304 fails to open, the oxygen side valves 228, 230 may be sized so that the oxygen side valves 228, 230 can match the rate of depressurization in the electrolysis system 10. The oxygen side valves 228, 230 may have maximum opening that is high enough to match the rate of depressurization in the electrolysis system 10.

In one embodiment, the HGM 206 shown in FIG. 2, may operate at a pressure in the range of about 20 bar to about 36 bar, including any pressure or range comprised therein. In some embodiments, flow may be choked through any valve on the hydrogen side. Flow is considered to be choked when the ratio of the upstream pressure to the downstream pressure is greater than or equal to about 1.89. Mass flow rate of hydrogen ($dm_{H_2}/dt$) is described by equation 3. $C_1$ is a choking constant and $C_{vMAX}$ is the Cv value corresponding to the maximum opening of the largest valve on the hydrogen side.

$$\frac{dm_{H_2}}{dt} = \frac{C_1 * P_{H_2} * Cv_{max}}{\sqrt{T_{H_2}}} \quad \text{----------(3)}$$

$$\frac{dp_{H_2}}{dt} = \frac{dm_{H_2}}{dt} * \frac{R_g T_{H_2}}{M_{wH_2} * V_{HGM}} \quad \text{----------(4)}$$

As shown in equation 4, depressurization of hydrogen ($d_{pH_2}/dt$) is proportional to the mass flow rate of hydrogen and dependent upon upstream hydrogen volume in the HGM 206 ($V_{HGM}$), hydrogen temperature at the HGM 206 ($T_{H_2}$), and hydrogen composition at the HGM 206. $M_{WH_2}$ is the molecular weight of hydrogen and $R_g$ is the universal gas constant.

A similar relationship may exist at the OGM 210. The upstream oxygen volume in the OGM 210 ($V_{OGM}$) may be different than the upstream hydrogen volume ($V_{HGM}$). In some embodiments, the valves 224, 222, 228, 230, 302, 304 may be configured and/or sized to ensure that the rate of hydrogen depressurization can match the rate of oxygen depressurization even when one of the valves 224, 222, 228, 230, 302, 304 fails to open.

$$dp_{H2} / dt_{MAX} <= dp_{O2} / dt_{MAX} \qquad \text{------------(5)}$$

$$CV_{MAX\_OGM}/CV_{MAX\_HGM} >= C1, H_2 / C2, O_2 \ * \ P_{H2\_NOM} / P_{O2\_NOM} \ * \\ M_{WO2} / M_{WH2} \quad V_{OGM} / V_{HGM} \ * \ sqrt \ [(T_{H2})/ (T_{O2})] \qquad \text{---(6)}$$

As differential pressure control is controlled by pressure control valves on oxygen side, the rate of depressurization on the oxygen side should match the rate of depressurization on hydrogen side so that the pressure differential in maintained within a required range. $CV_{MAX\_OGM}$ is the maximum opening of the valve 228 or 230, $CV_{MAX\_HGM}$ is the maximum opening of the valve 222 or 224, $C1, H_2$ and $C2, O_2$ are variables (e.g., specific gas constant etc.) based on gas properties and valve characteristics represented by typical sizing equation used by ISA (e.g., $C1, H_2 = 77$, and $C2, O_2 = 308.85$). $P_{H2\_NOM}$ is the nominal operating pressure of HGM, $P_{O2\_NOM}$ is the nominal operating pressure of HGM, $V_{OGM}$ is upstream oxygen volume at the OGM 210, $V_{HGM}$ is upstream hydrogen volume at the HGM 206, $T_{H2}$ is upstream hydrogen temperature, $T_{O2}$ is upstream oxygen temperature and $M_{WO2}$ is the molecular weight of oxygen. In some embodiments, $P_{H2\_NOM}$ may be about 35 bar and $P_{O2\_NOM}$ may be about 31 bar.

$CV_{MAX\_OGM}$ and $CV_{MAX\_HGM}$ may be chosen to ensure that the electrolysis system 10 can meet the maximum flow requirements for hydrogen and oxygen. Further, since oxygen is used to control the pressure difference, the oxygen side valves 228, 230 may be sized or configured to match the hydrogen side valves 224, 222, 302, 304.

$$CV_{MAX\_RATIO} = CV_{MAX\_OGM} / CV_{MAX\_HGM} \qquad \text{-----------(7)}$$

$CV_{MAX\_RATIO}$ is the ratio of $C_V$ corresponding to the maximum opening of valves. In some embodiments. The $CV_{MAX\_RATIO}$ may be greater than about 2.5.

In one embodiment, one or more of the hydrogen valves 224, 222, 302, and/or 304 may be used for pressure control under normal operating conditions. In some embodiments, the hydrogen valves 224, 222, 302, and/or 304 may be used for controlling differential pressure under startup operating conditions. In some embodiments, the use of the hydrogen valves 224, 222, 302, and/or 304 for controlling differential pressure control may be based on relative size of the HGM 206 and/or OGM 210. In some embodiments, the use of the hydrogen side valves 224, 222, 302, and/or 304 for differential pressure control may be based on gas production rate in the CSM 208.

In some embodiments, during startup, pressure may build up faster at the hydrogen side valves 224, 222, 302, 304 compared to the oxygen side valves 228, 230 at any given production rate. In some embodiments, the absolute pressure of hydrogen may be controlled by the lower dp/dt (lower of the pressure change of hydrogen and oxygen. In some embodiments, the differential pressure may be controlled by the higher dp/dt (higher of the pressure change of hydrogen and oxygen.

$$dp_{H2} / dt = dn_{H2} \ dt \ *RT/V_{HGM} \qquad \text{-------------(8)}$$

$$dp_{O2} / dt = dn_{O2} \ dt \ *RT/V_{OGM} \qquad \text{-------------(9)}$$

During a given production rate, the number of moles of hydrogen produced may be about two times the number of moles of oxygen produced. Therefore,

$$d_{H2} / d_{O2} = 2 \ * \ V_{OGM} / V_{HGM} = 2 * \ 4500/ 7000 \quad \text{--------(10)}$$

In some embodiments, the hydrogen side valves 224, 222, 302, 304 are used to control differential pressure during startup. In some embodiments, when the gas volume switches the oxygen side valves 228, 230 may be used to control differential pressure.

For example, if $2 * V_{OGM} / V_{HGM}$ is greater than or equal to 1, differential pressure during startup may be controlled by the hydrogen side valves 224, 222, 302, 304 and the oxygen side valves 228, 230 may be closed. Alternatively, or additionally, if $2 * V_{OGM} / V_{HGM}$ is less than 1, differential pressure during startup may be controlled by the oxygen side valves 228, 230 and the hydrogen side valves 224, 222, 302, 304, 230 may be closed.

In some embodiments, during shutdown, a rate or depressurization may be determined and executed by the gas pressure controller 250. The gas pressure controller 250 may monitor maximum depressurization rate on both hydrogen side and the oxygen side based on equations 1 and 2. The gas pressure controller 250 may calculate, determine, and/or estimate the limiting case of controllable depressurization for the hydrogen side and the oxygen side based on the maximum controllable position (Cv) of each valve. The gas pressure controller 250 may identify a decay rate of pressure versus time and follow this decay rate until a limiting depressurization rate is determined. The gas pressure controller 250 may maintain control over both the pressure and the differential pressure throughout depressurization.

In some embodiments, the gas pressure controller 250 may reduce the flow rate of the deionized water into the electrolyzer cell stack 11 in the CSM 208 so that the DI water inlet pressure at the CSM 208 is less than the threshold pressure that may damage the electrolyzer cell stack 11 as the oxygen side and hydrogen side pressures are reduced.

In some embodiments, the gas pressure controller 250 may reduce hydrogen and oxygen production rate under certain overpressure conditions. For example, when pressure in the hydrogen to the user increases above a hydrogen user threshold amount, the gas pressure controller 250 may reduce hydrogen and oxygen production rate. The hydrogen user threshold amount may exceed the pressure set point by about 0 bar to about 10 bar, including any pressure or range comprised therein. For example, the hydrogen user threshold amount be 0.5 bar, about 0.5 bar to about 5 bar, about 1 bar to 1.5 bar, about 1 bar to about 3 bar, about 3 bar to about 10 bar, and/or about 5 bar to about 10 bar.

When pressure in the hydrogen to the vent increases above a hydrogen vent threshold amount, the gas pressure controller 250 may reduce hydrogen and oxygen production rate. The hydrogen vent threshold amount may exceed the pressure set point by about 0 bar to about 10 bar, including any pressure or range comprised therein. For example, the hydrogen vent threshold amount be in the range of about 0.5 bar to 1.5 bar, or about 0.25 bar to about 2 bar above the pressure set point.

When the pressure continues to rise above a vent release hydrogen threshold, the gas pressure controller 250 may trigger the vent valve controller 514 to open the vent valve 224 to provide an additional pathway to reduce pressure. The vent release hydrogen threshold amount may range from about 0 to about 5 bar above the threshold used for the user hydrogen controller 512, including any pressure or range comprised therein. For example, the vent release hydrogen threshold may be about 0.25 bar to about 2 bar, or about 0.25 bar to about 1.5 bar, or about 0.25 bar to about 1 bar above the threshold used for the user hydrogen controller 512.

When differential pressure in the oxygen to the vent increases above an oxygen vent threshold amount, the gas pressure controller 250 may reduce hydrogen and oxygen production rate. In some embodiments, when differential pressure in the oxygen to the vent increases above an oxygen vent threshold amount, the gas pressure controller 250 may not reduce hydrogen and oxygen production rate and instead vent the excess oxygen. The gas pressure controller 250 may not reduce hydrogen and oxygen production rate when the pressure in the oxygen to user varies. The oxygen vent threshold amount may exceed the pressure set point by about 0 bar to about 5 bar, including any pressure or range comprised therein.

In some embodiments, an open vent valve 236, 224 may be used as an additional layer of protection during overpressure conditions. The open vent valve 236, 224 may be used as an additional layer of protection when pressure in the hydrogen to the user increases above the hydrogen user threshold amount and the production rate of hydrogen and oxygen may not be able to be reduced further. In some embodiments, the open vent valve 224, 236 may be used when the differential pressure in the oxygen to the user becomes increasingly negative as the oxygen side pressure in the OGM 210 increases.

In some embodiments, the control valve split logic may be used to control flow through the hydrogen side valves 224, 222, 302, 304 and the oxygen side valves 228, 230. In some embodiments, when the differential pressure rises above a set differential pressure plus by a threshold differential pressure, the hydrogen pressure target at HGM may be reduced by the gas pressure controller 250. The threshold differential pressure may range from about 0.5 bar to about 1 bar including any pressure or range comprised therein. The gas pressure controller 250 may monitor downstream sensors positioned downstream of valves 224, 228 to return the electrolysis system 10 to normal operating conditions. The downstream pressure measured by the downstream sensors may range from about 11 bar to about 33 bar including any pressure or range comprised therein. Such monitoring of overpressure conditions may enable a smooth reset without having to shut down the electrolysis system 10.

In some embodiments, the pressure drop in the CSM 208 on the anode side due to deionized water flow (dP_DI_water) through the electrolyzer cell stack 11 depends on water flow rate, oxygen production, and a threshold differential pressure that may cause electrolyzer cell stack 11 damage. The threshold differential pressure that may cause electrolyzer cell stack 11 damage is stack-specific and may include a low damage threshold (dP_damage_lo) and a high damage threshold (dP_damage_hi). The electrolyzer cell stack 11 may be damaged if the differential pressure between the pressure at the deionized water inlet 211 and oxygen pressure at the oxygen gas outlet on the anode side is lower than the low damage threshold and/or higher than the high damage threshold. In some embodiments, the low damage threshold may be about -1 bar or less. In some embodiments, the high damage threshold may be about 10 bar or more. In other embodiments, the high damage threshold may be about 5 bar or more.

In some embodiments, the gas pressure controller 250 can determine a target differential pressure to be centered based on the low and high damage thresholds. In some embodiments, the gas pressure controller 250 can vary the target differential pressure based on the differential pressure in the electrolyzer cell stack 11. In some embodiments, the gas pressure controller 250 can set the target differential pressure to a fixed value for all operating states (e.g., startup, shutdown etc.).

In some embodiments, the gas pressure controller 250 may monitor upstream parameters of HGM 206 and/or the OGM 210 that may affect the rate of depressurization for a given valve 224, 222, 302, 304, 228, 230 positions. The upstream parameters can include but are not limited to gas volume, gas temperature, gas composition, and liquid levels in separators 203, 205. The gas pressure controller 250 may monitor these upstream parameters and adjust the opening of one or more of the valves 224, 222, 302, 304, 228, 230. Similarly, the gas pressure controller 250 may adjust the target differential pressure according to water flow through the electrolyzer cell stack 11 and/or differential pressure measurements. For example, a lower differential pressure allows more leeway in increasing the differential pressure to avoid damaging the stack 11. The gas pressure controller 250 may use the upstream parameters in mathematical and/or physical models to control and/or execute the operation of the electrolysis systems 10.

In some embodiments, the gas pressure controller 250 may monitor the downstream parameters of HGM 206 and/or the OGM 210 that may affect the rate of depressurization for a given valve 224, 222, 302, 304, 228, 230 positions. The downstream pressure may have a significant influence on pressure control. For example, if p_downstream > p_upstream / 1.9, then valve opening to achieve same flow rate through valve may be larger.

The gas pressure controller 250 may be in communication with a computing device comprising a processor over a network. The computing device may be embodied as any type of computation or computer device capable of performing the functions described herein, including, but not limited to, a server (e.g., stand-alone, rack-mounted, blade, etc.), a network appliance (e.g., physical or virtual), a high-performance computing device, a web appliance, a distributed computing system, a computer, a processor-based system, a multiprocessor system, a smartphone, a tablet computer, a laptop computer, a notebook computer, and a mobile computing device.

The computing device may include one or more of a processor, an input/output (I/O) subsystem, a memory, a data storage device, a communication subsystem, and/or a display that may be connected to each other, in communication with each other, and/or configured to be connected and/or in communication with each other through wired, wireless and/or power line connections and associated protocols (e.g., Ethernet, InfiniBand®, Bluetooth®, Wi-Fi®, WiMAX, 3G, 4G LTE, 5G, etc.).

The computing device may also include additional and/or alternative components, such as those commonly found in a computer (e.g., various input/output devices). In other embodiments, one or more of the illustrative computing device of components may be incorporated in, or otherwise form a portion of, another component. For example, the memory, or portions thereof, may be incorporated in the processor.

The features illustrated or described in connection with one exemplary embodiment or aspect may be combined with any other feature or element of any other embodiment or aspect described herein. Such modifications and variations are intended to be included within the scope of the present disclosure. Further, a person skilled in the art will recognize that terms commonly known to those skilled in the art may be used interchangeably herein.

The above embodiments and aspects are described in sufficient detail to enable those skilled in the art to practice what is claimed and it is to be understood that other embodiments may be utilized, and that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated.

Furthermore, references to "one embodiment" of the presently described subject matter are not intended to be interpreted as excluding the existence of additional embodiments that also incorporate the recited features. Specified numerical ranges of units, measurements, and/or values include, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third," and the like, as used herein do not denote any order or importance, but rather are used to distinguish one element from another. The term "or" and "and/or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps. The phrase "consisting of" or "consists of" refers to a compound, composition, formulation, or method that excludes the presence of any additional elements, components, or method steps.

The term "consisting of" also refers to a compound, composition, formulation, or method of the present disclosure that excludes the presence of any additional elements, components, or method steps. The phrase "consisting essentially of" or "consists essentially of" refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

**Claims**

1. An electrolytic cell system comprising:

   a hydrogen gas pressure control configuration including at least a first hydrogen pressure control valve, a second hydrogen pressure control valve, and a first alternate depressurization path, and
   a gas pressure control system configured to control two pressures within the electrolytic cell system based on an operating state of the electrolytic cell system.

2. The system of claim 1, wherein the two pressures comprise absolute hydrogen pressure and differential pressure measured at two locations in the electrolytic cell system.

3. The system of claim 2, wherein the absolute pressure is determined by a sensor positioned in a hydrogen gas module comprised in the electrolytic cell system and wherein the two locations comprise a deionized water inlet and either a hydrogen outlet or a hydrogen inlet in a cell stack module comprised in the electrolytic cell system.

4. The system of claim 2, further comprising an oxygen gas pressure control configuration including a first oxygen pressure control valve, a second oxygen pressure control valve, and a second alternate depressurization path.

5. The system of claim 4, wherein the gas pressure control system is configured to control opening of the first hydrogen pressure control valve, the second hydrogen pressure control valve, the first oxygen pressure control valve, and the second oxygen hydrogen pressure control valve based on a model that uses one or more upstream or downstream parameters of a hydrogen gas module and/or an oxygen gas module.

6. The system of claim 5, wherein the model uses one or more of gas volume, gas temperature, gas composition, gas pressure, and liquid levels in hydrogen gas module and/or oxygen gas module separators.

7. The system of claim 1, wherein the hydrogen gas pressure control configuration further includes a third hydrogen pressure control valve positioned parallel to the first hydrogen pressure control valve, wherein the third hydrogen pressure control valve is not larger than the first hydrogen pressure control valve, and wherein the first hydrogen pressure control valve and the third hydrogen pressure control valve are configured to flow about 100% of the hydrogen to a hydrogen vent.

8. The system of claim 4, wherein when the absolute pressure in the hydrogen flow increases above a hydrogen threshold amount, the gas pressure control system is configured to reduce hydrogen and oxygen production rate.

9. The system of claim 2, wherein when the absolute pressure in the hydrogen flow increases above a first hydrogen threshold amount, the gas pressure control system is configured to send hydrogen to a hydrogen vent.

10. The system of claim 1, wherein the hydrogen gas pressure control configuration further includes a third hydrogen pressure control valve positioned parallel to the second hydrogen pressure control valve, wherein the third hydrogen pressure control valve is not larger than the second hydrogen pressure control valve, and wherein the second hydrogen pressure control valve and the third hydrogen pressure control valve are configured to flow about 100% of the hydrogen to a user.

11. The system of claim 10, wherein the system is configured to implement a control valve split logic when operating the first, second, and third hydrogen pressure control valves based on the operating state of the electrolytic cell system.

12. The system of claim 4, wherein the valves of the oxygen gas pressure control configuration and the valves of the hydrogen gas pressure control configuration are configured to allow a matching pressure drop under a normal operating conditions.

13. The system of claim 4, wherein the first hydrogen valve, the second hydrogen valve, the first oxygen valve, or the second oxygen valve is configured to be in a parallel configuration with a third valve, and wherein the system is configured to implement a control valve split logic when operating the valve that is in the parallel configuration with the third valve based on the operating state of the electrolytic cell system.

14. The method of operating an electrolytic cell system comprising:

    determining hydrogen demand from the electrolytic cell system,
    determining an operating state of the electrolytic cell system,
    passing hydrogen through hydrogen gas pressure control configuration including a first hydrogen pressure control valve, a second hydrogen pressure control valve, and a first alternate depressurization path, and

    controlling two pressures within the electrolytic cell system based on the operating state of the electrolytic cell system.

15. The method of claim 14, further comprising passing oxygen through an oxygen gas pressure control configuration including a first oxygen pressure control valve, a second oxygen pressure control valve, and a second alternate depressurization path.

*FIG. 1A*

EP 4 632 109 A1

*FIG. 1B*

*FIG. 1C*

*FIG. 2*

**FIG. 2 (CONT.)**

EP 4 632 109 A1

FIG. 3

**FIG. 4**

**GAS PRESSURE CONTROLLER**

**ISOLATION VALVE CONTROL** 506

**PRESSURE CONTROL** 502

| 224 | 230 |
| 222 | 224 |
| 510, 512, 514 | 246 |

**DIFFERENTIAL PRESSURE CONTROL** 504

| 230 | 224 |
| 228 | 230 |
| 516, 518 | 226 |

**PARALLEL VALVE CONTROL** 520

| H2 CV SPLIT 522 | O2 CV SPLIT 524 |

**VALVE DIAGNOSTICS** 508

**MONITOR & DIAGNOSE**

*FIG. 5*

*FIG. 6*

*FIG. 7A*

*FIG. 7B*

EP 4 632 109 A1

*FIG. 8*

EP 4 632 109 A1

*FIG. 9*

EP 4 632 109 A1

Europäisches
Patentamt

European
Patent Office

Office européen
des brevets

# EUROPEAN SEARCH REPORT

**Application Number**

EP 25 16 7834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 395 639 A (WENZHOU GAOQI HYDROGEN ENERGY TECH CO LTD) 7 July 2023 (2023-07-07) | 1-7, 10-15 | INV. C25B1/04 C25B15/02 C25B15/08 |
| A | * paragraphs [0036], [0064], [0080], [0082]; figures 1,2,6,7 * | 8,9 | |
| X | US 2005/183948 A1 (RUSTA-SALLEHY ALI [CA] ET AL) 25 August 2005 (2005-08-25) * paragraphs [0031], [0044], [0050], [0053], [0056], [0059]; figures 2,3 * | 1-15 | |
| X | US 2004/013923 A1 (MOLTER TRENT [US] ET AL) 22 January 2004 (2004-01-22) | 1-3,5-7, 10-14 | |
| A | * paragraph [0070]; figures 4-5 * | 4,8,9,15 | |
| X | JP 2003 138391 A (HITACHI SHIPBUILDING ENG CO) 14 May 2003 (2003-05-14) | 1-3,5-14 | |
| A | * paragraphs [0020], [0021]; figure 3 * | 4,15 | |
| A | CN 115 679 341 A (CHONGLI XINTIAN WIND ENERGY CO LTD ET AL.) 3 February 2023 (2023-02-03) * paragraphs [0058], [0063]; figure 1 * | 1-15 | TECHNICAL FIELDS SEARCHED (IPC) C25B H01M |
| A | EP 3 360 187 B1 (COMMISSARIAT ENERGIE ATOMIQUE [FR]) 26 June 2019 (2019-06-26) * claim 8; figure 4 * | 1-15 | |
| A | US 2020/332426 A1 (KURASHINA DAISUKE [JP] ET AL) 22 October 2020 (2020-10-22) * paragraphs [0034] - [0038]; figure 1 * | 1-15 | |
| A | US 2015/060293 A1 (TAKEUCHI JUN [JP] ET AL) 5 March 2015 (2015-03-05) * paragraphs [0033] - [0045]; figure 1 * | 1-15 | |

-/--

The present search report has been drawn up for all claims

| Place of search | Date of completion of the search | Examiner |
|---|---|---|
| Munich | 3 September 2025 | Ulivieri, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 16 7834

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/295821 A1 (GOGOANA RADU [US]) 21 September 2023 (2023-09-21) * paragraphs [0039] - [0044]; figures 6-7 * | 1-15 | |

- - - - -

| | | | |
|---|---|---|---|
| | | | **TECHNICAL FIELDS SEARCHED (IPC)** |

The present search report has been drawn up for all claims

| Place of search | Date of completion of the search | Examiner |
|---|---|---|
| Munich | 3 September 2025 | Ulivieri, Enrico |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 16 7834

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2025

| Patent document cited in search report | | Publication date | Patent family member(s) | | Publication date |
|---|---|---|---|---|---|
| CN 116395639 | A | 07-07-2023 | NONE | | |
| US 2005183948 | A1 | 25-08-2005 | US | 2005183948 A1 | 25-08-2005 |
| | | | US | 2005197743 A1 | 08-09-2005 |
| | | | WO | 2005028713 A1 | 31-03-2005 |
| | | | WO | 2005028714 A1 | 31-03-2005 |
| | | | WO | 2005028715 A1 | 31-03-2005 |
| US 2004013923 | A1 | 22-01-2004 | DE | 10307112 A1 | 30-10-2003 |
| | | | JP | 2003282122 A | 03-10-2003 |
| | | | US | 2004013923 A1 | 22-01-2004 |
| JP 2003138391 | A | 14-05-2003 | JP | 4000415 B2 | 31-10-2007 |
| | | | JP | 2003138391 A | 14-05-2003 |
| CN 115679341 | A | 03-02-2023 | NONE | | |
| EP 3360187 | B1 | 26-06-2019 | CA | 3000481 A1 | 13-04-2017 |
| | | | DK | 3360187 T3 | 23-09-2019 |
| | | | EP | 3360187 A1 | 15-08-2018 |
| | | | FR | 3042069 A1 | 07-04-2017 |
| | | | JP | 6574901 B2 | 11-09-2019 |
| | | | JP | 2018532049 A | 01-11-2018 |
| | | | US | 2018287172 A1 | 04-10-2018 |
| | | | WO | 2017060267 A1 | 13-04-2017 |
| US 2020332426 | A1 | 22-10-2020 | CN | 111826681 A | 27-10-2020 |
| | | | JP | 7090050 B2 | 23-06-2022 |
| | | | JP | 2020176300 A | 29-10-2020 |
| | | | US | 2020332426 A1 | 22-10-2020 |
| US 2015060293 | A1 | 05-03-2015 | JP | 6059116 B2 | 11-01-2017 |
| | | | JP | 2015048507 A | 16-03-2015 |
| | | | US | 2015060293 A1 | 05-03-2015 |
| US 2023295821 | A1 | 21-09-2023 | US | 2023295821 A1 | 21-09-2023 |
| | | | WO | 2023183037 A2 | 28-09-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63575130